**Europäisches Patentamt**

**European Patent Office**

**Office européen des brevets**

(19)

(11) Veröffentlichungsnummer: **0 183 918**
**A2**

(12) # EUROPÄISCHE PATENTANMELDUNG

(21) Anmeldenummer: **85110634.4**

(22) Anmeldetag: **23.08.85**

(51) Int. Cl.⁴: **B 60 C 23/00**
**B 60 B 11/04**

(30) Priorität: **14.11.84 DE 3441512**

(43) Veröffentlichungstag der Anmeldung:
**11.06.86 Patentblatt 86/24**

(84) Benannte Vertragsstaaten:
**DE FR GB IT**

(71) Anmelder: **Dr.Ing.h.c. F. Porsche Aktiengesellschaft**
**Porschestrasse 42**
**D-7000 Stuttgart 40(DE)**

(72) Erfinder: **Bott, Helmuth**
**Ritterstrasse 2**
**D-7530 Pforzheim(DE)**

(54) **Kraftfahrzeugrad.**

(57) Es wird ein Kraftfahrzeugrad mit einer Zwillingsbereifung beschrieben, das einen Reifen mit einem Winterprofil und einen weiteren auf einer gemeinsamen Felge angeordneten Reifen mit einem Sommerprofil umfasst. Jeder Reifen ist zur Erzielung einer wahlweisen Druckabsenkung und -erhöhung mit einer an sich bekannten Einrichtung zur Luftdruckregelung versehen. Die Einrichtung zur Luftdruckregelung ist mit einer an sich bekannten Einrichtung zur Luftdruckkontrolle über eine gemeinsame Steuereinheit verknüpft. Diese Steuereinheit beeinflussende Batätigungsschalter dienen zur aufeinander abgestimmten Druckeinstellung der Reifen für den Sommer- und Winterbetrieb.

Kraftfahrzeugrad

Die Erfindung bezieht sich auf ein Kraftfahrzeugrad mit einer Zwillingsbereifung.

Es sind Räder mit jeweils zwei Reifen auf einer gemeinsamen Felge, sogenannte Zwillingsreifen für Fahrzeuge, aus der US-PS 3 664 709 bekannt geworden. Diese Reifen weisen jeweils ein gleiches Straßenprofil für den Sommerbetrieb auf. Sie sind mit einer Gesamtbreite versehen, die insgesamt einer Radbreite eines PKW-Reifens entspricht, wie z.B. aus der Zeitschrift ADAC Motorwelt 11/83, S. 45, bekannt ist. Derartig ausgeführte Räder sind alleinig für den Sommerbetrieb ausgelegt und bei Winterbetrieb ist eine Umrüstung mit Reifen mit einem entsprechenden Winterprofil erforderlich.

Aufgabe der Erfindung ist es, ein Kraftfahrzeugrad zu schaffen, mit dem ohne Umrüstung der Räder sowohl im Winterbetrieb als auch im Sommerbetrieb sicher zu fahren ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung von einem Reifen mit Winterprofil und einem weiteren Reifen mit Sommerprofil auf einer Felge oder auf zwei miteinander verbundenen Felgen das Fahrzeug bei unterschiedlichen Straßenverhältnissen sicher fahrbar ist. So ist es z.B. dem Fahrer möglich, die Reifen des Fahrzeugs mit Winterprofil während der Fahrt allein einzusetzen, indem die Luft aus den Reifen mit Sommerprofil abgelassen wird und diese Reifen nicht mehr mittragen. Zur Einschaltung der Druckregelung zum Sommer- oder Winterbetrieb während der Fahrt sowie bei Stillstand des Fahrzeugs dienen Betätigungsschalter. Diese sind mit einer Steuereinheit zusammengeschaltet, in welcher die Regelung des Reifenluftdrucks entsprechend dem gewünschten
Betrieb und in Abhängigkeit vom augenblicklich gemessenen
Reifenluftdruck erfolgt. Es ist dem Fahrer somit in einfacher
Weise möglich, bei sich verändernden Straßenverhältnissen die
entsprechenden Reifen während der Fahrt ohne Umrüstung gezielt
einzusetzen.

Reifendruckkontrollsysteme und Reifendruckregeleinrichtungen
sind bekannt und es ist mit Hilfe der Steuervorrichtung in einfacher Weise möglich, die Druckverhältnisse in allen Reifen des
Fahrzeugs zu verändern und auch eine Kontrolle über den augenblicklichen Reifendruck zu erhalten, wozu z.B. entsprechende
optische oder akustische Anzeigegeräte im Fahrzeug angeordnet
sein können.

Denkbar wäre auch eine Zwillingsbereifung ohne Einrichtung zur
Druckregelung, wobei dann die beiden Reifen gemeinsam tragen
würden.

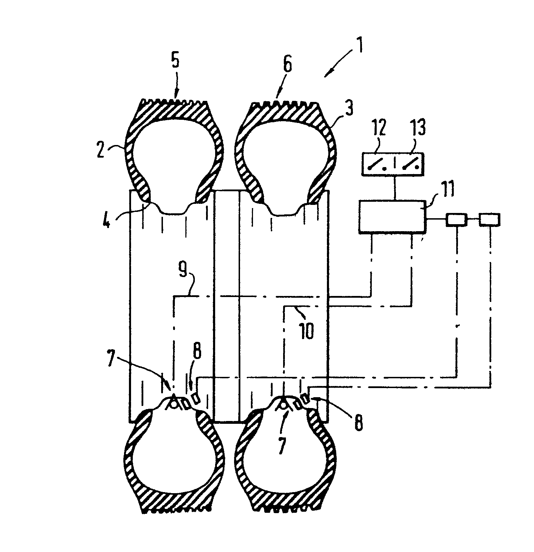

Ein Ausführungsbeispiel der Erfindung ist in der Zeichnung
schematisch dargestellt und zeigt ein Rad mit einer Zwillingsbereifung sowie ein Schaltschema mit einer Reifendruckkontrolleinrichtung, einer Reifendruckregeleinrichtung, einer
Steuereinheit sowie mit entsprechenden Betätigungsschaltern.

In der Zeichnung ist ein einziges Rad 1 eines Kraftfahrzeugs
mit zwei Reifen 2 und 3 auf einer gemeinsamen Felge 4
dargestellt. Der außenliegende Reifen 2 ist mit einem
Sommerprofil 5 und der innenliegende Reifen 3 ist mit einem
Winterprofil 6 versehen. Die Reifen 2 und 3 können auf der
gemeinsamen Felge 4 - wie dargestellt - oder auch jeweils auf
einer separaten Felge angeordnet sein, die dann miteinander zu
einem Rad 1 über entsprechende Befestigungsmittel verbunden
sind.

Jeder Reifen 2 und 3 ist mit einer Einrichtung 7 zur Luftdruckregelung und einer weiteren Einrichtung 8 zur Luftdruckkontrolle versehen. Die Leitungen 9 und 10 der Einrichtung 7 dienen zur Luftzu- und -abführung, wobei eine Luftkammer nicht näher dargestellt ist. Die Leitungen 9 und 10 sind zu einer Steuereinheit 11 geführt, in welche die über die Einrichtung 8 ermittelten Werte des augenblicklichen Reifenluftdrucks eingehen und entsprechend verarbeitet werden. Mit der Steuereinheit 11 sind Betätigungsschalter 12 und 13 verbunden, wobei der eine Schalter 12 bei Winterbetrieb und der weitere Schalter 13 bei Sommerbetrieb betätigt wird. Diese Anordnung mit den Schaltern 12 und 13 und der Steuereinheit 11 ist nur in vereinfachter Form dargestellt und soll alleinig einen möglichen Aufbau mit Betätigung darstellen.

Die Mischbereifung auf einem Rad mit einem Sommerreifen und einem Winterreifen wird z.B. bei sich verändernden Straßenverhältnissen verwendet. So kann in einfacher Weise bei plötzlich auftretendem Schnee im Sommerreifen 2 durch Betätigen des Schalters 12 eine Druckabsenkung erzielt werden, so daß nur noch der Winterreifen zum Tragen kommt. Bei schneefreien Straßenverhältnissen wird dagegen der Schalter 13 betätigt und der Druck im Sommerreifen wieder erhöht, wobei der Druck im Winterreifen dann erniedrigt wird.

Patentansprüche


1. Kraftfahrzeugrad mit einer Zwillingsbereifung, dadurch gekennzeichnet, daß das Rad (1) einen Reifen (3) mit einem Winterprofil (6) und einen weiteren, auf einer gemeinsamen Felge (4) angeordneten Reifen (2) mit einem Sommerprofil (5) umfasst und jeder Reifen (2 und 3) zur Erzielung einer wahlweisen Druckabsenkung und -erhöhung mit einer an sich bekannten Einrichtung zur Luftdruckregelung (7) versehen ist.

2. Kraftfahrzeugrad nach Anspruch 1, dadurch gekennzeichnet, daß die Einrichtung zur Luftdruckregelung (7) mit einer an sich bekannten Einrichtung zur Luftdruckkontrolle (8) über eine gemeinsame Steuereinheit (11) verknüpft ist und diese Steuereinheit (11) beeinflussende Betätigungsschalter (12, 13) zur aufeinander abgestimmten Druckeinstellung der Reifen (2 und 3) für den Sommer- und Winterbetrieb dienen.

3. Kraftfahrzeugrad nach den Ansprüchen 1 oder 2, dadurch gekennzeichnet, daß der jeweils nicht tragende Reifen (2 oder 3) gegenüber dem tragenden Reifen (2 oder 3) einen geringeren Reifendruck und einen sich verkleinernden Durchmesser aufweist.

4. Kraftfahrzeugrad nach Anspruch 1, dadurch gekennzeichnet, daß der Reifen (2) für den Sommerbetrieb an der Außenseite und der Reifen (3) für den Winterbetrieb an der Innenseite des Rades (1) angeordnet ist.